# EUROPÄISCHE PATENTANMELDUNG

(11) **EP 0 790 266 A1**
(43) Veröffentlichungstag der Anmeldung: **20.08.1997**
(21) Anmeldenummer: 96119912.2
(22) Anmeldetag: 12.12.1996
(51) Int. Cl.: C08G 18/79

(54) **Isocyanurat- und uretdiongruppenhaltige Polyadditionsprodukte sowie ein Verfahren zu ihrer Herstellung**

(30) Priorität: 19.02.1996 DE 19606030
(71) Anmelder: HÜLS AKTIENGESELLSCHAFT, 45764 Marl (DE)
(72) Erfinder: Wolf, Elmar, Dr., 45661 Recklinghausen (DE)

(57) **Zusammenfassung**

Isocyanurat- und uretdiongruppenhaltige Polyadditionsprodukte aus einem isocyanurat- und uretdiongruppenhaltigen Isophorondiisocyanat und Diolen und/oder disekundären Diaminen, wobei ein maximal 2 Gew.-% Isophorondiisocyanat enthaltendes isocyanurat- und uretdiongruppenhaltiges Isophorondiisocyanat, das durch Reaktion von Isophorondiisocyanat mit Trialkylphosphinen hergestellt wurde, mit Diolen und/oder disekundären Diaminen in einem NCO/OH- bzw. NCO/NH-Verhältnis von 1:0,5 - 1:0,95 bzw. 0,5:1 - 0,95:1 bei 20 bis 90 °C im Lösemittel umgesetzt wird.

## Beschreibung

Gegenstand der vorliegenden Erfindung sind neue isocyanurat- und uretdiongruppenhaltige Polyadditionsprodukte sowie ein Verfahren zu ihrer Herstellung.

In der DE-PS 30 30 572 werden uretdiongruppenhaltige Polyadditionsprodukte beschrieben, die zur Herstellung von blockierungsmittelfreien PUR-Pulvern inzwischen wirtschaftliche Bedeutung erlangt haben. Bei diesen in der DE-PS 30 30 572 beanspruchten Verbindungen handelt es sich um Polyadditionsverbindungen aus einem isocyanuratgruppenfreien uretdiongruppenhaltigen Isophorondiisocyanat (im folgenden- als Isophorondiisocyanat-Uretdion bezeichnet und als IPDI-Uretdion abgekürzt) und Diolen, wobei das so erhaltene Additionsprodukt gegebenenfalls ganz oder teilweise mit Monoalkoholen bzw. Monoaminen umgesetzt wird.

Voraussetzung für die Herstellung der uretdiongruppenhaltigen Polyadditionsprodukte aus IPDI-Uretdion und Diolen ist, wie in der DE-OS 30 30 572, S. 1, Z. 20 - 35, aufgeführt, ein weitgehend isocyanuratfreies IPDI-Uretdion, das in der DE-PS 30 30 513 und DE-OS 37 39 549 beschrieben wird. In der DE-PS 30 30 513 wird die Dimerisierung von IPDI mit Tris-(dialkylamino)-phosphinen, in der DE-OS 37 39 549 mit 4-Dialkyl-aminosubstituiertem Pyridin beschrieben.

Diese im technischen Maßstab hergestellten uretdiongruppenhaltigen Polyadditionsprodukte weisen eine Reihe von Nachteilen auf die in der Qualität des eingesetzten IPDI-Uretdions begründet sind. So werden z. B. für die Dimerisierung von IPDI mit substituierten Pyridinen lange Reaktionszeiten benötigt. Obendrein weisen die so hergestellten IPDI-Uretdione, wie in der EP 0 478 990 beschrieben, eine starke Eigenfarbe auf. Des weiteren müssen, wie eigene Versuche zeigen, die im IPDI-Uretdion enthaltenen Pyridinreste desaktiviert werden.

Es wäre sehr vorteilhaft und wünschenswert, wenn bei der Herstellung der uretdiongruppenhaltigen Polyadditionsprodukte ein IPDI-Uretdion eingesetzt werden könnte, das nicht mit den geschilderten Nachteilen des z. Z. eingesetzten IPDI-Uretdions behaftet wäre.

Es wurde überraschenderweise gefunden, daß zur Herstellung der uretdiongruppenhaltigen Polyadditionsprodukte das entsprechend der Lehre der DE-OS 19 34 763 hergestellte IPDI-Uretdion eingesetzt werden kann. Dies war umso überraschender, da in der DE-PS 30 30 572 ausdrücklich darauf hingewiesen wird, daß ein nach der DE-OS 19 34 763 hergestelltes IPDI-Uretdion, das noch 20 - 40 Gew.-% des trimeren IPDI (Isocyanurat des IPDI) im Gemisch enthält, für die gezielte Weiterreaktion mit z. B. Diolen nicht in Frage kommt.

Gegenstand der Erfindung sind isocyanurat- und uretdiongruppenhaltige Polyadditionsprodukte aus einem isocyanurat- und uretdiongruppenhaltigen Isophorondiisocyanat und Diolen und/oder disekundären Diaminen, wobei ein maximal 2 Gew.-% Isophorondiisocyanat enthaltendes isocyanurat- und uretdiongruppenhaltiges Isophorondiisocyanat, das durch Reaktion von Isophorondiisocyanat mit Trialkylphosphinen hergestellt wurde, mit Diolen und/oder disekundären Diaminen in einem NCO/OH- bzw. NCO/NH-Verhältnis von 1:0,5 - 1:0,95 bzw. 0,5:1 - 0,95: 1 bei 20 bis 90 °C im Lösemittel umgesetzt wird.

Das erfindungsgemäß eingesetzte isocyanuratgruppen- und uretdiongruppenhaltige Isophorondiisocyanat, das im folgenden als IPDI-UD/T abgekürzt werden soll, wird durch Reaktion von IPDI mit den in der DE-OS 19 34 763 beschriebenen Katalysatoren hergestellt. Hierbei wird IPDI mit 1 - 2 Gew.-% Tributylphosphin 10 - 40 h bei Raumtemperatur umgesetzt. Je länger die Umsetzung des IPDI beträgt, desto höher ist der Gehalt an Isocyanuratgruppen im Reaktionsgemisch. Das nicht umgesetzte IPDI wird durch Dünnschichtdestillation bei 100 - 140 °C/0,1 mbar vom Reaktionsprodukt abgetrennt. Das IPDI befreite Reaktionsprodukt enthält ≤ 1 % freies IPDI und einen NCO-Gehalt von 17 - 18 %; der Gehalt an trimerem IPDI beträgt je nach IPDI-Umsatz 20 bis maximal 30 Gew.-%.

Bei der Umsetzung von IPDI-UD/T mit dem Diol kann man dabei so verfahren, daß das Diol in einem Guß oder eben durch allmähliches Eintragen dem IPDI-UD/T zugeführt wird.

Bevorzugt werden die Reaktionspartner in den angegebenen Mengenverhältnissen gemischt. Danach wird das IPDI-UD/T vorgelegt und das Diol zugegeben. Die Reaktion wird in Gegenwart von gegenüber Isocyanaten inerten Lösemitteln bei 20 bis 90 °C durchgeführt. Geeignete Lösemittel sind aromatische Kohlenwasserstoffe, wie z. B. Toluol oder Xylol, Chlorbenzol, Nitrobenzol und Ketone, wie z. B. Aceton, Methylisobutylketon, Cyclopentanon, Cyclohexanon oder Ester wie Ethyl- bzw. Butylacetat.

Beispiele derartiger Diole sind Ethylenglykol, Propylen-(1.2)- und -(1.3)-glykol, 2-Ethylhexandiol-1.3, Hexandiol, Octan-, Decan-, Dodecandiol, Neopentylglykol, 1.4-Bishydroxymethylcyclohexan, 3(4),8(9)-Bishydroxymethyltricyclodecan, 2-Methylpropandiol-1.3, 3-Methylpentandiol-1.5, Diethylenglykol und Hydroxypivalinsäureneopentylglykolester. Bevorzugt findet Butandiol-1.4 als verknüpfendes Diol zum Aufbau der erfindungsgemäßen isocyanuratgruppenhaltigen Polyuretdion-Polyurethane Anwendung.

Als Diole können auch vorteilhafterweise lineare hydroxylgruppenhaltige Polyester mit einer Molmasse zwischen 250 und 2000, vorzugsweise 300 - 1500, als Kettenverlängerer für IPDI-UD/T eingesetzt werden. Sie werden hergestellt z. B. durch Kombination von Diolen und Dicarbonsäuren. Zur Herstellung der Kettenverlängerer werden neben den o. g. Diolen bevorzugt trans- und cis-Cyclohexandimethanol (CHDM) eingesetzt. Zu den bevorzugten Dicarbonsäuren zählen aliphatische, ggf. alkylverzweigt, wie Bernstein-, Adipin-, Kork-, Azelain- und Sebacinsäure, 2.2.4(2.4.4)-Trimethyladipinsäure; weiterhin werden auch Lactone und Hydroxycarbonsäuren, wie ε-Caprolacton und Hydroxycapronsäure, dazu gezählt. Die im erfinderischen Verfahren eingesetzten Diol/Kettenverlängerer-Gemische stehen im Verhältnis von 5:95 bis 90 - 10 zueinander.

Die Umsetzung findet im allgemeinen bei Temperaturen von 60 - 90 °C statt. Die Reaktionskomponenten werden so lange bei den angegebenen Temperaturen erhitzt, bis alle OH-Gruppen unter Bildung von Urethangruppen umgesetzt sind. Dies dauert je nach Reaktionstemperatur 0,5 - 5 h. Zur Beschleunigung der Reaktion können auch Katalysatoren, wie z. B. Zinn-II-acetat, Zinn-II-octoat, Zinn-II-laurat, Dibutylzinndiacetat, Dibutylzinndilaurat, Dibutylzinnmaleat oder Dioctylzinndiacetat, eingesetzt werden.

Die Aufarbeitung der Reaktionsansätze erfolgt in der Regel so, daß man die isocyanuratgruppenhaltigen Polyuretdion-Polyurethane vom gegebenenfalls mitverwendeten Lösemittel befreit. Dazu geeignet sind Abdampfschnecken, Filmtruder oder auch Sprühtrockner.

Eine besonders vorteilhafte Variante der Erfindung besteht darin, die beschriebenen Reaktionsprodukte (mit freien NCO-Gruppen) mit Monoalkoholen so umzusetzen, daß alle oder wenigstens ein Teil der NCO-Gruppen zur Reaktion gebracht werden. Man geht so vor, daß man das IPDI-UD/T mit dem Diol bzw. dem linearen Hydroxylgruppen enthaltenden Polyester unter den bereits beschriebenen Bedingungen zur Reaktion bringt und nach erfolgter Umsetzung nicht abkühlt, sondern unter Beibehaltung der Temperatur dem Reaktionsprodukt den Monoalkohol zugibt. Die Reaktionsmischung wird dann so lange weitererhitzt, bis pro eingesetztes OH-Äquivalent die äquivalente Menge NCO umgesetzt worden ist. Die Isolierung der Reaktionsprodukte erfolgt ähnlich wie vorstehend beschrieben. Geeignete einwertige Alkohole sind Methanol, Ethanol, n-Butanol, 2-Ethylhexanol und n-Decanol. Anstelle der Monoalkohole können auch primäre oder sekundäre Monoamine eingesetzt werden. Als Monoamine eignen sich z. B. n-Propylamin, n-Butylamin, n-Hexylamin und Dibutylamin.

Eine besonders vorteilhafte Variante der Erfindung besteht darin, IPDI-UD/T mit den Diolen und/oder den OH-Gruppen enthaltenden linearen Polyestern (OH-Gruppen enthaltender Kettenverlängerer) so umzusetzen, daß die Reaktionsprodukte endständige OH-Gruppen enthalten, d. h. daß das IPDI-UD/T mit dem Diol und/oder Kettenverlängerer in einem NCO/OH-Verhältnis von 0,5:1 - 0,95:1 umgesetzt wird. Diese Polyadditionsverbindungen aus IPDI-UD/T und Diolen und/oder Kettenverlängerern zeichnen sich gegenüber den entsprechenden NCO-Gruppen und/oder Urethan- bzw.

Harnstoffgruppen enthaltenden Polyadditionsverbindungen durch eine erhöhte Reaktivität (in der Hitze) gegenüber OH-Gruppen enthaltenden Reaktionspartnern aus.

Werden erfindungsgemäß anstelle von Diolen bzw. OH-Gruppen enthaltenden Kettenverlängerern disekundäre Diamine eingesetzt, so hat es sich als besonders vorteilhaft erwiesen, in Lösung bei Raumtemperatur zu arbeiten. Zu dem gelösten IPDI-UD/T wird das disekundäre Diamin in dem angegebenen Mengenverhältnis portionsweise so zugegeben, daß die Temperatur der Reaktionsmischung 40 °C nicht übersteigt. Nach Beendigung der Diaminzugabe ist die Reaktion beendet, und für den Fall, daß die Reaktionsprodukte freie NCO-Gruppen oder sek. Aminogruppen enthalten, erfolgt die Entfernung des Lösemittels, in der Regel handelt es sich um Aceton, wie bereits bei den entsprechenden IPDI-UD/T-Diol-Addukten. Sollen die freien NCO-Gruppen der Reaktionsprodukte ganz oder teilweise mit Monoalkoholen umgesetzt werden, wird nach Beendigung der Diaminzugabe der Monoalkohol dem Reaktionsgemisch zugegeben und so lange bei 60 °C erhitzt, bis pro eingesetztes OH-Äquivalent 1 NCO-Äquivalent reagiert hat. Die Entfernung des Lösemittels erfolgt dann, wie bereits mehrfach beschrieben.

Bei den erfindungsgemäß einzusetzenden Diaminen handelt es sich um disekundäre Diamine, die in zwei Stufen hergestellt werden, wobei in der 1. Stufe ein (cyclo)aliphatisches Diamin mit zwei primären Aminogruppen mit einem Aldehyd oder Keton zur Schiffschen Base kondensiert wird, und in der 2. Stufe die Hydrierung der Schiffschen Base erfolgt. Für die Kondensation zur Schiffschen Base kommen grundsätzlich alle (cyclo)aliphatischen Diamine, wie z. B. Ethylendiamin, 1.2-Diaminopropan, 2-Methylpentamethylendiamin, Hexamethylendiamin, 2.2.4(2.4.4)Trimethylhexamethylendiamin, Isophorondiamin (IPD), 1.2-Diamino-cyclohexan sowie 1.3-Bis(aminomethyl)benzol, in Frage. Als für die Herstellung der Schiffschen Base einzusetzende Carbonylverbindung kommen grundsätzlich alle (cyclo)aliphatischen Aldehyde und Ketone in Frage; bevorzugt werden jedoch Isobutyraldehyd, 2-Ethylhexanal, Methylethylketon, Methylisobutylketon, Diisobutylketon, Cyclohexanon und 3.5.5-Trimethylcyclohexanon eingesetzt. Eine besonders vorteilhafte Variante des erfindungsgemäßen Verfahrens besteht darin, disekundäre Diamine einzusetzen, wie sie durch Reaktion von di-primären Diaminen mit Acrylsäureestern, wie z. B. Acrylsäuremethyl-, -ethyl-, -butyl-, -2-ethylhexyl-ester, erhalten werden. Die Umsetzung des Diamins mit dem Acrylsäureester erfolgt bei 60 - 80 °C im Molverhältnis 1:2.

Ein weiterer Gegenstand der vorliegenden Erfindung sind die wie beansprucht hergestellten isocyanurat- und uretdiongruppenhaltigen Polyadditionsprodukte aus isocyanurat- und uretdiongruppenhaltigem Isophorondiisocyanat, das mit tertiären Phosphinen hergestellt wurde, und Diolen und/oder linearen hydroxylgruppenhaltigen Polyestern mit einer Molmasse von 250 - 2000, vorzugsweise von 300 - 1500, und gegebenenfalls Monoalkoholen bzw. Monoaminen.

Bei den erfindungsgemäßen Polyadditionsprodukten, nämlich
1. Addukten mit entständigen freien NCO-Gruppen;
2. solche, deren NCO-Gruppen ganz oder teilweise mit Monoalkoholen oder Monoaminen umgesetzt sind;
3. solche mit endständigen OH-Gruppen
handelt es sich im allgemeinen um Verbindungen des Molekulargewichtsbereiches 1500 - 10 000, vorzugsweise 3000 - 7000. Die Polyadditionsprodukte weisen einen Schmelzpunkt von 80 - 160, vorzugsweise 90 - 130 °C auf.

Die erfindungsgemäßen Verbindungen eignen sich insbesondere als Härter für Zerewittinoff-aktive Wasserstoffatome aufweisende höherfunktionelle (thermoplastische) Verbindungen. In Kombination mit derartigen Zerewittinoff-aktiven Wasserstoffatomen aufweisenden Verbindungen bilden die Polyadditionsprodukte oberhalb 160 °C, vorzugsweise 180 °C, zu hochwertigen Kunststoffen aushärtbare Systeme. Das bedeutendste Anwendungsgebiet für derartige Systeme ist ihre Verwendung für PUR-Pulverlacke.

### Experimenteller Teil

### I. Herstellung des isocyanurat- und uretdiongruppenhaltigen Isophorondiisocyanats (IPDI-UD/T)

1000 Gew.-T. IPDI werden mit 10 Gew.-T. Tributylphosphin bei Raumtemperatur ca. 40 h reagieren gelassen. Nachdem das Reaktionsgemisch einen NCO-Gehalt von ca. 32 % enthält, wird das nicht umgesetzte IPDI mit dem Katalysator bei 140 °C/0,1 mbar im Dünnschichtverdampfer abgetrennt.

Der Rückstand, das isocyanurat- und uretdiongruppenhaltige Isophorondiisocyanat, enthält 1 Gew.-% IPDI und hat einen NCO-Gehalt von 17,4%. Nach dem Erhitzen auf 180 °C/1 h beträgt der NCO-Gehalt 32,8 %. Der Gehalt an Tributylphosphin beträgt 0,07 %.

### II. Allgemeine Herstellungsvorschrift der hydroxylgruppenhaltigen linearen Polyester

Die Ausgangskomponenten werden in einen Reaktor gegeben und mit Hilfe eines Ölbades auf ca. 140 °C erhitzt. Nachdem die Stoffe zum größten Teil geschmolzen sind, werden 0,1 Gew.-% Di-n-butylzinnoxid als Katalysator zugesetzt. Die erste H₂O-Abspaltung tritt bei ca. 150 °C auf. Innerhalb von 2 - 3 h wird die Temperatur auf ca. 190 °C erhöht, und die Veresterung innerhalb von ca. 10 h zu Ende gebracht. Während der gesamten Reaktionszeit wird gerührt und ein schwacher Stickstoffstrom durch das Reaktionsgemisch geleitet. Die Säurezahl der Polyester lag stets < 2 mg KOH/g.
1. 1 mol Adipinsäure und 2 mol Neopentylglykol (NPG) wurden gemäß der allgemeinen Herstellungsvorschrift umgesetzt. Das Reaktionsprodukt hatte folgende Kenndaten:

| | |
|---|---|
| OH-Zahl [mg KOH/g]: | 340 ± 10 |
| Viskosität [mPa·s] bei 25 °C: | 1600 ± 200 |

2. 1,25 mol Adipinsäure und 2,25 mol NPG wurden gemäß der allgemeinen Herstellungsvorschrift umgesetzt. Das Reaktionsprodukt hatte folgende Kenndaten:

| | |
|---|---|
| OH-Zahl [mg KOH/g]: | 290 ± 15 |
| Viskosität [mPa·s] bei 25 °C: | 2000 ± 200 |

3. 4 mol Adipinsäure, 3 mol NPG und 2 mol Hexandiol wurden gemäß der allgemeinen Herstellungsvorschrift umgesetzt. Das Reaktionsprodukt hatte folgende Kenndaten:

| | |
|---|---|
| OH-Zahl [mg KOH/g]: | 105 ± 10 |
| Viskosität [mPa·s] bei 25 °C: | 3400 ± 300 |

### III. Disekundäre Diamine

Die im erfindungsgemäßen Verfahren eingesetzten Diamine (1 - 3) wurden in bekannter Weise durch Umsetzung des Diamins mit der Carbonylverbindung (im 3. Beispiel: umgekehrt) und anschließender Hydrierung hergestellt.
1. N.N'-Diisobutyl-isophorondiamin
2. 1.1.6.6-Tetraisopropyl-2.5-diazahexan
3. N.N'-Di-tert.-butylethylendiamin
4. Das Diamin in diesem Beispiel (4) wurde durch Reaktion von 1 mol Isophorondiamin und 2 mol Acrylsäure-t-butylester hergestellt. Sein Amin-Äquivalentgewicht betrug 214.

### IV. Allgemeine Herstellungsvorschrift für die erfindungsgemäßen isocyanurat- und uretdiongruppenhaltigen Polyadditionsverbindungen

1. IPDI-UD/T und Diole/OH-Gruppen enthaltender linearer Polyester
   Die Polyolkomponente sowie das IPDI-UD/T werden in Aceton so gelöst, daß eine ca. 50%ige Lösung entsteht. Unter starkem Rühren und Inertgasatmosphäre werden 0,02 Gew.-% Dibutylzinndilaurat zugegeben und so lange zum Sieden erhitzt, bis pro Mol OH-Gruppen ein NCO-Äquivalent unigesetzt ist. Dies dauert ca. 3 - 4 h.
   Sollen die freien NCO-Gruppen noch mit Monoalkoholen blockiert werden, so erfolgt nun die Zugabe des Monoalkohols, wobei so lange weitererhitzt wird, bis pro Mol Monoalkohol 1 NCO-Äquivalent umgesetzt ist. Nach erfolgter Umsetzung wird das Aceton abdestilliert. Zur Entfernung der letzten Reste Aceton wird Vakuum angelegt.
2. IPDI-UD/T und disekundäre Diamine
   Das IPDI-UD/T wird in Aceton gelöst. Unter intensivem Rühren wird das disekundäre Diamin bei Raumtemperatur so zugegeben, daß die Temperatur nicht über 40 °C steigt. Nach erfolgter Diaminzugabe ist die Reaktion beendet; die Abtrennung des Acetons erfolgt dann, wie unter IV. 1. beschrieben.
   Sollen die freien NCO-Gruppen des Reaktionsproduktes noch ganz oder teilweise mit einem Monoalkohol blockiert werden, so wird vor der Acetonabtrennung der Monoalkohol mit 0,02 % DBTL der acetonischen Lösung zugegeben und so lange auf 60 °C erhitzt, bis pro Mol Monoalkohol 1 NCO-Äquivalent umgesetzt ist. Danach wird das Aceton wie unter IV. 1. abgetrennt.

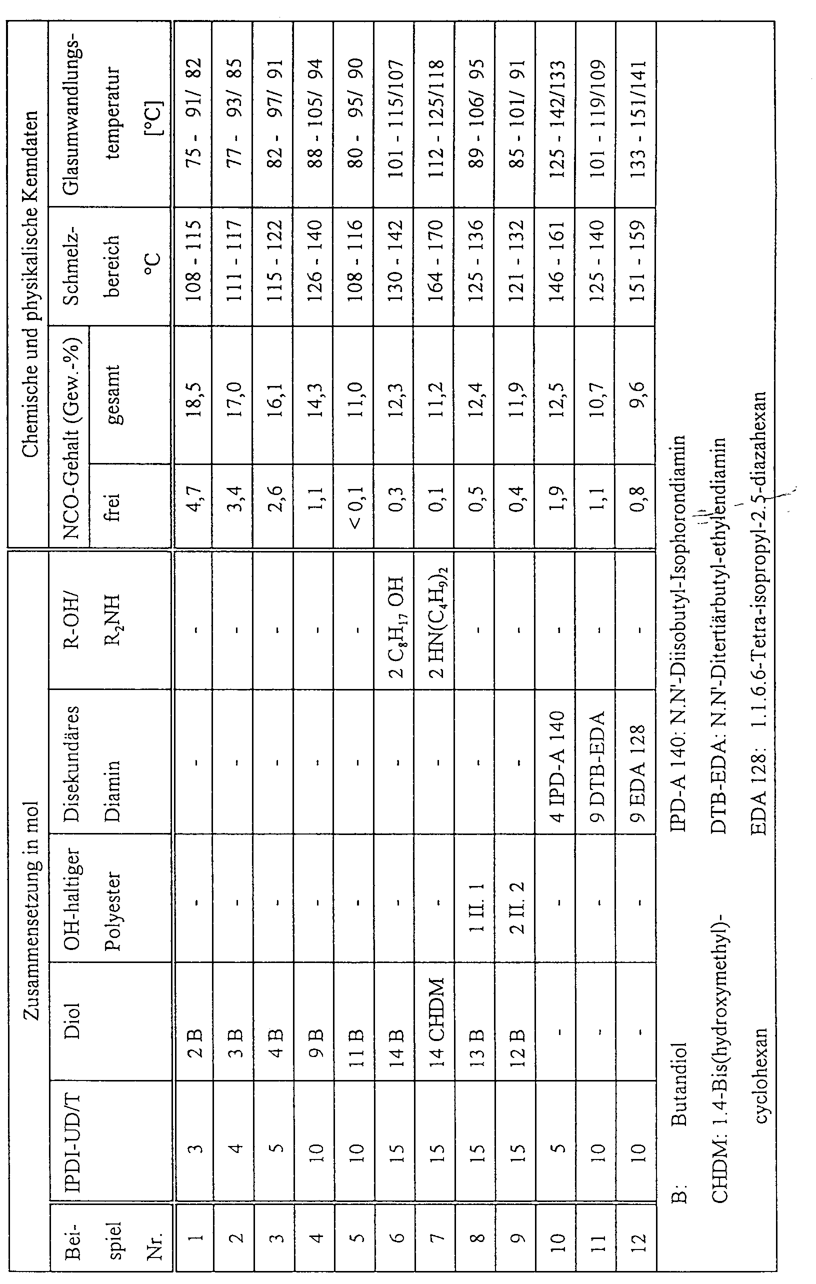

## Patentansprüche

1. Isocyanurat- und uretdiongruppenhaltige Polyadditionsprodukte aus einem isocyanurat- und uretdiongruppenhaltigen Isophorondiisocyanat und Diolen und/oder disekundären Diaminen, wobei ein maximal 2 Gew.-% Isophorondiisocyanat enthaltendes isocyanurat- und uretdiongruppenhaltiges Isophorondiisocyanat, das durch Reaktion von Isophorondiisocyanat mit Trialkylphosphinen hergestellt wurde, mit Diolen und/oder disekundären Diaminen in einem NCO/OH- bzw. NCO/NH-Verhältnis von 1:0,5 - 1:0,95 bzw. 0,5:1 - 0,95:1 bei 20 bis 90 °C im Lösemittel umgesetzt wird.

2. Polyadditionsprodukte nach Anspruch 1,
dadurch gekennzeichnet,
daß als Lösemittel aromatische Kohlenwasserstoffe, Ketone und/oder Essigsaureester eingesetzt werden.

3. Polyadditionsprodukte nach den Ansprüchen 1 bis 2,
dadurch gekennzeichnet,
daß als Lösemittel Toluol, Xylol, Aceton, Methylisobutylketon, Cyclopentanon, Cyclohexanon, Ethyl- und/oder Butylacetat eingesetzt werden.

4. Polyadditionsprodukte nach den Ansprüchen 1 bis 3,
dadurch gekennzeichnet,
daß als Diole Ethylenglykol, Butandiol, Pentandiol-1.5, Hexandiol, Decandiol, Dodecandiol, 3-Methylpentandiol-1.5, 2.2.4(2.4.4)-Trimethylhexandiol sowie Hydroxypivalinsäureneopentylglykolester eingesetzt werden.

5. Polyadditionsprodukte nach den Ansprüchen 1 bis 4,
dadurch gekennzeichnet,
daß als Diole lineare hydroxylgruppenhaltige Polyester mit einer Molmasse zwischen 250 und 2000, vorzugsweise zwischen 300 und 1500, eingesetzt werden.

6. Polyadditionsprodukte nach den Ansprüchen 1 bis 5,
dadurch gekennzeichnet,
daß die linearen hydroxylgruppenhaltigen Polyester aufgebaut sind aus mindestens je einem Monomeren, ausgewählt aus Ethylenglykol, Butandiol, Pentandiol-1.5, Hexandiol-1.6, Decandiol, Dodecandiol sowie 3-Methylpentandiol, 2.2.4(2.4.4)-Trimethylhexandiol sowie Hydroxypivalinsäureneopentylglykolester, 2-Methylpropandiol, 2.2-Dimethylpropandiol, Diethylenglykol, trans- und cis-Cyclohexandimethanol und Bernstein-, Adipin-, Kork-, Azelain-, Sebacinsäure, 2.2.4(2.4.4)-Trimethyladipinsäure, ε-Caprolacton und Hydroxycapronsäure.

7. Polyadditionsprodukte nach den Ansprüchen 1 bis 6,
dadurch gekennzeichnet,
daß als Kettenverlängerer Diol/hydroxylgruppenhaltige Polyester-Gemische im Verhältnis 5:95 bis 90:10 eingesetzt werden.

8. Polyadditionsprodukte nach den Ansprüchen 1 bis 7,
dadurch gekennzeichnet,
daß als disekundäre Diamine Reaktionsprodukte von diprimären Diaminen mit Molgewicht 60 - 250 und Carbonylverbindungen mit 2 - 10 C-Atomen, die nach erfolgter Umsetzung hydriert werden, eingesetzt werden.

9. Polyadditionsprodukte nach den Ansprüchen 1 bis 8,
dadurch gekennzeichnet,
daß als disekundäre Diamine Reaktionsprodukte von diprimären Diaminen mit Molgewicht 60 - 250 und Acrylsäureestern, deren Alkoholkomponente 1 - 10 C-Atome enthält, eingesetzt werden.

10. Polyadditionsprodukte nach den Ansprüchen 1 bis 9,
dadurch gekennzeichnet,
daß sie ganz oder teilweise mit Monoalkoholen und/oder Monoaminen umgesetzt wurden.

11. Polyadditionsprodukte nach Anspruch 10,
dadurch gekennzeichnet,
daß Monoalkohole mit 1 - 8 C-Atomen oder Monoamine mit 4 - 12 C-Atomen eingesetzt werden.

12. Verfahren zur Herstellung von isocyanurat- und uretdiongruppenhaltigen Polyadditionsprodukten aus einem isocyanurat- und uretdiongruppenhaltigen Isophorondiisocyanat und Diolen und/oder disekundären Diaminen, wobei ein maximal 2 Gew.-% Isophorondiisocyanat enthaltendes isocyanurat- und uretdiongruppenhaltiges Isophorondiisocyanat, das durch Reaktion von Isophorondiisocyanat mit Trialkylphosphinen hergestellt wurde, mit Diolen und/oder disekundären Diaminen in einem NCO/OH- bzw. NCO/NH-Verhältnis von 1:0,5 - 1:0,95 bzw. 0,5:1 - 0,95:1 bei 20 bis 90 °C im Lösemittel umgesetzt wird.
